# EUROPEAN PATENT APPLICATION

(11) **EP 2 130 803 A1**
(43) Date of publication of application: **09.12.2009**
(21) Application number: 08165556.5
(22) Date of filing: 30.09.2008
(51) Int. Cl.: C02F 11/04, B09B 1/00

(54) **Method for sewage sludge utilisation for intensification of biogas production in refuse collection depot**

(30) Priority: 02.06.2008 PL 38533608
(71) Applicant: Politechnika Lubelska, 20-219 Lublin (PL)
(72) Inventor: Pawlowska, Malgozata, 20-027, LUBLIN (PL); Siepak, Jerzy, 60-687, Poznan (PL); Pawlowski, Lucjan, 20-027, LUBLIN (PL); Pleczynski, Jozef, 61-606, Poznan (PL)
(74) Representative: Kaminski, Piotr

(57) **Abstract**

The method for sewage sludge utilisation for intensification of biogas production in refuse collection depot is **characterised in that** in the quarter where communal waste is stored a ditch 3-5 m deep, preferably 2,5 m. deep, is hollowed and then it is filled with sewage sludge up to the level of 1 meter below the surface and subsequently the sludge is covered with a layer of communal waste that was dug out during the ditch hollowing.

## Description

The present invention relates to a method for sewage sludge utilisation for intensification of biogas production in refuse collection depot.

In sewage treatment plants considerable amounts of sewage sludge are produced and they are difficult to utilise.

One of the least expensive methods for sewage sludge utilisation is their use in agriculture as a substute for fertlizers. This method however has limitations. Most of all the sewage sludge often contains excessive amounts of heavy metals and as such it cannot be utilised in agriculture. Furthermore, in recent years accumulation of non-biodegradable dioxins was reported, which also limits agricultural utilisation of sludge coming from sewage treatment plants, even the sludge not containing excessive amounts of heavy metals.

Other known method involves wet burning of sludge, which is initially dehydrated by use of filter press or centrifuge. The drawback of this method is its high cost, low energy effectiveness (2-3 MJ/kg) and large quantity of ashes remaining after burning.

Sewage sludge can also by deposited in sewage sludge ponds, which however take up a lot of space, which is a drawback of the method.

Communal waste in refuse collection depots undergo methane fermentation, which runs in several phases.

During the first phase of waste degradation - aerobic - (Phase 1), which lasts several days, the oxygen is accessible to microorganisms. In this phase hydrolysis of complex organic compounds, such as hydrocarbons, proteins and fats occurs and as a result monosaccharides, glycerol, higher fatty acids and amino acids are produced. Hydrolysis is the first stage of decomposition of organic matter. The products of this process are soluble and are easily assimilated by microorganisms. Hydrolysis is carried out by saprophytic bacteria, which produce extracellular enzymes with which insoluble compounds are treated. As a result of these reactions soluble monomers are created. When the oxygen contents drops, the phase of anaerobic decomposition begins (Phase II). During this stage the dominant microorganisms are those, which are facultative and obligatory anaerobes (Bozkurt S., Moreno L., Neretnieks I. in Long-term Processes in Waste Deposits, The Science of the Total Environment, 250, 101-121, 2000). The first stage of anaerobic phase is called acidogenic phase, i.e. acidic, because during this phase the products of hydrolysis are processed by acidogenic bacteria into organic acids: formic acid, acetic acid, propionic and butyric acids. In addition alcohols are formed: methanol, ethanol, but also formed are hydrogen, carbon dioxide, ammonia and hydrogen sulphide.

In subsequent phase - acetogenic - acetic acid is formed and it is the main substrate, from which methane will be created later on. Decomposition of fatty acids, organic acids and alcohols causes release of hydrogen. Bacteria from group of *Syntrophobacter* and *Syntrophomonas* are considered as acetogenic bacteria, they are characterised by long generation time and capability of growth on solid media. In the course of fermentation the mentioned bacteria utilise for growth the compounds produced during the acidic fermentation and convert these products into acetates, carbon dioxide and hydrogen. Bacterial growth in this phase can be inhibited by H₂. Hydrogen present in this environment dislodges acetogenic bacteria which can lead to accumulation of volatile organic acids, lowering reaction and in consequence it can stop the growth of methanogenic bacteria (Janosz-Rajczyk M. *et al* "Selected elementary processes in environmental engineering" Publication of Politechnika Cz 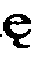 stochowska 2004, ISBN 83-7193-271-5).

Transition into the phase of anaerobic decomposition (Phase III) is linked with appearance of methane in biogas. Initially the methane content is variable, with the time though it stabilises to amount around 45-60% volumetric. The phase of stable methane production can last between 8 and 40 years. However, biogas utilisation for energy purposes is economically viable in the period between 5 and 20 years. After that the methane contents drops gradually until it disappears completely.

Methane fermentation aims at conversion of organic compounds at different oxidation levels into gaseous end products, mainly methane and carbon dioxide and the intermediate products such as alcohols and fatty acids. Intermediate products, both mineral as well as organic serve as source of carbon and energy for microorganisms. During the methanogenesis also occur: the aerobic ammonification, reduction of nitrates as well as the microbiological reduction of sulphates into hydrogen sulphide.

In recent years methane contained in biogas was used for energy purposes. From technical point of view, the biogas can only be utilised for energy purposes when the methane content exceeds 30%. This means that methane created in phases I and II cannot be collected for the energy purposes. This part of methane is therefore released to atmosphere, where its presence is unwanted, since one methane molecule has 20 times stronger effect on greenhouse effect than that of carbon dioxide molecule. To prevent this effect, more and more often biofilters are employed for methane oxidation. This way the influence of methane on greenhouse effect is eliminated, but at the same time additional costs are incurred and the methane energy value is lost.

The essence of the present method for sewage sludge utilisation for intensification of biogas production in refuse collection depot is that in the quarter where communal waste is stored a ditch 3-5 m deep, preferably 2,5 m. deep is hollowed and then it is filled with sewage sludge up to the level of 1 meter below the surface and subsequently the sludge is covered with a layer of communal waste that was dug out during the ditch hollowing.

The beneficial effect of the method according to present invention is that one can obtain the methane content in biogas of over 30% . The hydrogen sulphide contents drops from around 1% to 0,02-03%.

### Example:

In the area of refuse collection depot, having dimensions of 8m x 30 m a ditch was hollowed (18 m. in length, 3 m. in depth, and 2,5 m. in width). First the ditch was filled with a 2 m. deep layer of sewage sludge, after which the sludge layer was covered with 1 m. deep layer of communal waste. The composition of obtained biogas is presented in the table below.

| No | Parameter studied | Before sludge addition | After sludge addition days | | | | |
|---|---|---|---|---|---|---|---|
| | | | 30 | 90 | 180 | 270 | 750 |
| 1. | Air [% v/v] | 1,5 | 1,6 | 1,5 | 1,4 | 2 | 1,9 |
| 2. | CH₄ [% v/v] | 8% | 30,1 | 39,2 | 38,2 | 44,0 | 44,4% |
| 3. | CO₂ [% v/v] | 20% | 57,5 | 58,2 | 57 | 56 | 58% |
| 4. | Water vapour [% v/v] | 0,56 | 0,54 | 0,52 | 0,46 | 0,44 | 0,42 |

## Claims

1. The method for sewage sludge utilisation for intensification of biogas production in refuse collection depot **characterised in that** in the quarter where communal waste is stored a ditch 3-5 m deep, preferably 2,5 m. deep, is hollowed and then it is filled with sewage sludge up to the level of 1 meter below the surface and subsequently the sludge is covered with a layer of communal waste that was dug out during the ditch hollowing.
